# EUROPÄISCHE PATENTANMELDUNG

(11) **EP 3 593 878 A1**
(43) Veröffentlichungstag der Anmeldung: **15.01.2020**
(21) Anmeldenummer: 18182722.1
(22) Anmeldetag: 10.07.2018
(51) Int. Cl.: A63G 31/16, B65D 88/12, E04B 1/343

(54) **CONTAINER MIT INTEGRIERTER ROBOTERSTANDPLATTFORM**

(71) Anmelder: BEC GmbH, 72793 Pfullingen (DE)
(72) Erfinder: BUCK, Matthias, 72764 Reutlingen (DE); GERLICH, Martin, 79182 Stuttgart (DE)
(74) Vertreter: Reinhardt, Annette

(57) **Zusammenfassung**

Ein Container (1) mit integrierter Roboterstandplattform (16) besitzt einen Containerboden (2), auf dem ein Roboterarm (15) fixiert ist. Der Container (1) weist zwei Längsseiten (3, 4) auf, die zur Bildung der Roboterstandplattform (16) nach außen schwenkbar an dem Containerboden (2) gelagert sind.

## Beschreibung

Die Erfindung betrifft einen Container mit integrierter Roboterstandplattform.

Container zum Transport von Lasten per Schiff oder LKW, sogenannte Iso-Container, sind allgemein bekannt. Derartige Container sind quaderförmig und weisen üblicherweise einen Containerboden, Längsseiten, Querseiten sowie ein Containerdach auf. Dabei können einzelne Seiten offen ausgebildet sein, insbesondere zum Transport sehr großer Lasten. Die Wände und das Dach des Containers können aus festem Material wie beispielsweise Blech sein oder teilweise oder vollständig durch Planen gebildet sein.

Roboterarme werden beispielsweise als Handlingsroboter eingesetzt. Aus der DE 10 2016 012 805 A1 ist es auch bekannt, einen derartigen Roboterarm als Bewegungseinheit eines Fahrgeschäfts zu nutzen. Hierzu werden ein oder mehrere Sitze an dem Handabschnitt des Roboterarms fixiert und der Roboterarm dann in der gewünschten Weise bewegt.

Beim Betrieb eines solchen Roboterarms werden hohe Kräfte erzeugt, die über den Ständer des Roboterarms in den Boden eingeleitet werden müssen. Hierzu muss der Boden zur Aufnahme entsprechend hoher Traglast ausgebildet sein. Der Roboterarm ist zur Aufnahme der Betriebslasten üblicherweise am Boden zu verschrauben.

Der Erfindung liegt die Aufgabe zugrunde, eine Einrichtung zum einfachen Transport eines Roboterarms anzugeben und eine Möglichkeit zur einfachen Nutzung eines solchen Roboterarms beispielsweise als Fahrgeschäft anzugeben.

Diese Aufgabe wird erfindungsgemäß dadurch gelöst, dass der Container mit einer integrierten Roboterstandplattform ausgebildet wird. Der Roboterarm ist auf dem Containerboden fixiert. Der Roboterarm bleibt auch für den Betrieb am Containerboden fixiert. Dadurch kann der Container selbst die im Betrieb des Roboterarms auftretenden Lasten aufnehmen und hierzu entsprechend stabil ausgebildet werden. Am Einsatzort des Roboterarms müssen dadurch keine besonderen Vorkehrungen getroffen werden. Insbesondere kann der Roboterarm unabhängig von den vor Ort herrschenden Bodentragfähigkeiten aufgestellt werden, da über den Containerboden eine Verteilung der im Betrieb auftretenden Lasten auf eine ausreichend große Fläche erfolgt. Der Roboterarm kann dabei unmittelbar auf dem Containerboden fixiert sein. Es kann jedoch auch vorgesehen sein, dass der Roboterarm indirekt, beispielsweise über eine am Containerboden festgelegte Plattform, auf dem Containerboden fixiert ist. Um eine ausreichend große Fläche zu erreichen, ist vorgesehen, dass die Längsseiten zur Bildung der Roboterstandplattform nach außen schwenkbar an dem Containerboden gelagert sind. Dadurch kann eine große Fläche gebildet werden. Gleichzeitig wird der Bewegungsraum des Roboterarms im Betrieb durch die Längsseiten des Containers nicht eingeschränkt. Das Aufstellen des Roboterarms ist vereinfacht, da der Roboterarm nicht aus dem Container entnommen und außerhalb des Containers aufgestellt werden muss. Vielmehr ist es ausreichend, den Container zum Aufstellort zu transportieren und lediglich die Längsseiten des Containers nach außen zu schwenken, um die Roboterstandplattform zu bilden.

Vorteilhaft besitzt der Container Mittel zur Fixierung der Längsseiten an dem Containerboden in der nach außen geschwenkten Stellung. Die Fixierung der Längsseiten ist bevorzugt so stabil ausgebildet, dass über die Mittel zur Fixierung der Längsseiten die Betriebslasten vom Containerboden auf die Längsseiten übertragen und über die Längsseiten abgefangen werden können. Dadurch wird eine große Stabilität der Roboterstandplattform erreicht. Die Längsseiten liegen in der nach außen geschwenkten Stellung bevorzugt in einer Ebene mit dem Containerboden.

Vorteilhaft weist der Container zum Aufrichten und Absenken der Längsseiten des Containers mindestens eine Hubvorrichtung auf. In einfacher Gestaltung kann eine Hubvorrichtung mindestens eine Seilwinde sowie mindestens ein an einer Längsseite befestigtes Seil aufweisen. Die Seilwinde kann dabei über eine Kurbel oder alternativ oder ergänzend von einem Motor, insbesondere einem Elektromotor angetrieben sein. Alternativ kann die Hubvorrichtung mindestens einen hydraulischen Zylinder aufweisen. Der hydraulische Zylinder kann vorteilhaft mit einem Ende am Containerboden und mit dem anderen Ende an der zu bewegenden Längsseite des Containers fixiert sein. Es kann auch vorgesehen sein, dass die Schwenkgelenke, an denen die Längsseiten an dem Containerboden gelagert sind, mit einem Elektroantrieb ausgestattet sind, der die Längsseiten bewegt.

In bevorzugter Gestaltung sind an den Enden der Längsseiten jeweils Hubvorrichtungen vorgesehen. Bevorzugt können zwei gegenüberliegende Längsseiten über eine gemeinsame Hubvorrichtung abgesenkt bzw. aufgerichtet werden. Es kann jedoch auch vorgesehen sein, dass die Hubvorrichtungen für die beiden Längsseiten getrennt ausgebildet sind.

Der Container weist vorteilhaft Querseiten auf, wobei mindestens eine Querseite nach außen schwenkbar an dem Containerboden gelagert ist. Bevorzugt sind beide Querseiten des Containers nach außen schwenkbar gelagert, so dass auch die Querseiten des Containers in nach außen geschwenkter Stellung den Bewegungsraum des Roboterarms nicht beschränken. Die Querseiten des Containers bilden in der nach außen geschwenkten Stellung bevorzugt Teile der Roboterstandplattform. Die Ecken des Containers sind bevorzugt als Iso-Ecken ausgebildet. Dadurch können vorhandene Anbauteile an dem Container montiert werden, und für das Bewegen des Containers kann die bestehende Infrastruktur genutzt werden. Vorteilhaft weist der Container Aufnahmen für die Gabel eines Gabelstaplers auf. Dadurch kann der Container beispielsweise in einer Halle, einem Einkaufszentrum oder dergleichen mit geringem Abstand über dem Boden bewegt werden. Bevorzugt werden hierzu an den Iso-Ecken des Containers ergänzend Rollen angeordnet, so dass der Container mit geringem Kraftaufwand geschoben werden kann. Dadurch, dass der Container mit geringem Abstand über dem Boden von einem Gabelstapler transportiert werden kann, sind keine großen Tore oder dergleichen notwendig, wie sie beispielsweise für das Anliefern eines Containers mittels eines LKWs benötigt werden. In alternativer Gestaltung kann vorteilhaft vorgesehen sein, dass der Container keine Querseiten aufweist. Der Containerinnenraum kann dann an den Querseiten beispielsweise von Plane abgedeckt oder zu den Querseiten offen sein.

Es kann vorgesehen sein, dass mindestens eine Längsseite und/oder mindestens eine Querseite als mit einer Plane abdeckbarer Rahmen ausgebildet ist. Die Plane kann dabei auch über mehrere Längsseiten oder Querseiten und/oder über das Dach des Containers verlaufen. Alternativ oder ergänzend ist vorteilhaft vorgesehen, dass mindestens eine Längsseite und/oder mindestens eine Querseite als feste Wand ausgebildet ist.

Vorteilhaft ist der Containerboden zur Abfangung der Betriebslasten des Roboterarms verstärkt ausgebildet. In besonders vorteilhafter Gestaltung ist der Roboterarm zum Betrieb als Fahrgeschäft vorgesehen, und der Containerboden ist zur Abfangung der Betriebslasten ausgelegt, die im Betrieb des Roboterarms als Fahrgeschäft auftreten. Für den Betrieb als Fahrgeschäft sind am Handabschnitt des Roboterarms vorteilhaft ein oder mehrere Sitze montierbar.

Ausführungsbeispiele der Erfindung werden im Folgenden anhand der Zeichnung erläutert. Es zeigen:
- Fig. 1: eine perspektivische Darstellung eines am Dach offenen Containers,
- Fig. 2: den Container aus Fig. 1 mit nach außen geschwenkten Längsseiten und Querseiten,
- Fig. 3 und Fig. 4: perspektivische Darstellungen der Hubvorrichtungen des Containers,
- Fig. 5: eine Draufsicht auf den Container mit daran angeordneten Hubvorrichtungen,
- Fig. 6: eine ausschnittsweise vergrößerte Darstellung einer Längsseite des Containers mit daran angeordneten Stellfüßen,
- Fig. 7: eine Darstellung eines Ausführungsbeispiels des Containers mit den Längsseiten und den Querseiten in der nach außen geschwenkten Stellung in Draufsicht,
- Fig. 8: eine perspektivische Darstellung des Containers mit daran angeordneten Hubständern,
- Fig. 9: eine perspektivische Darstellung des Containers mit daran angeordneten Rollen,
- Fig. 10: den Roboterarm in perspektivischer Darstellung mit daran angeordneten Sitzen.

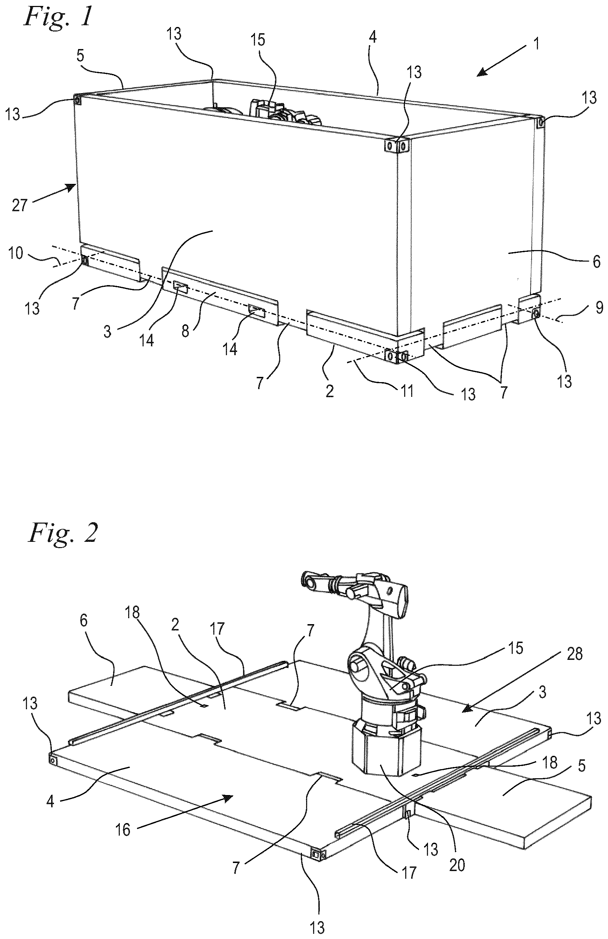

Fig. 1 zeigt in perspektivischer Darstellung einen Container 1, nämlich einen Iso-Container. Der Container besitzt genormte Abmessungen und ist dazu vorgesehen, beispielsweise auf einem LKW oder per Schiff verladen und transportiert zu werden. Der Container 1 besitzt einen Containerboden 2, zwei einander gegenüberliegende Längsseiten 3 und 4 sowie zwei einander gegenüberliegende Querseiten 5 und 6. Die Längsseiten 3 und 4 sind die langen Seiten des Containers 1 und die Querseiten 5 und 6 die kurzen Seiten. Der Container 1 bildet einen Quader. Die Längsseiten 3, 4 und die Querseiten 5, 6 sind jeweils über schematisch dargestellte Schwenkgelenke 7 schwenkbar am Containerboden 2 gelagert.

Fig. 1 zeigt die Längsseiten 3 und 4 und die Querseiten 5 und 6 in der nach oben geschwenkten Stellung 27. In der nach oben geschwenkten Stellung 27 begrenzen die Längsseiten 3, 4, die Querseiten 5, 6 sowie der Containerboden 2 einen Containerinnenraum 12, in dem ein Roboterarm 15 angeordnet ist. Der Roboterarm 15 ist fest mit dem Containerboden 2 verbunden.

Die Schwenkgelenke 7 sind so gestaltet, dass die Längsseiten 3, 4 und die Querseiten 5, 6 vom Containerboden 2 und vom Containerinnenraum 12 weg nach außen geklappt werden können. Dabei ist die Längsseite 3 um eine Schwenkachse 8 schwenkbar, die Längsseite 4 um eine parallel zur Schwenkachse 8 angeordnete Schwenkachse 9, und die Querseiten 5 und 6 sind um Schwenkachsen 10 und 11 schwenkbar.

Fig. 2 zeigt die Anordnung mit den Längsseiten 3, 4 und den Querseiten 5, 6 in ihrer nach außen geschwenkten Stellung 28. In dieser Stellung bilden die Längsseiten 3 und 4 und die Querseiten 5 und 6 mit dem Containerboden 2 eine Ebene. Diese Ebene bildet eine Roboterstandplattform 16.

Die Längsseiten 3 und 4 und die Querseiten 5 und 6 sind gegenüber dem Containerboden 2 zur Bildung der Roboterstandplattform 16 in ihrer Lage fixiert. Im Ausführungsbeispiel sind hierzu an den Längsseiten 3 und 4 Fixierungsstreben 17 vorgesehen. Auch eine Fixierung an den Iso-Ecken 13 kann vorteilhaft sein. Alternativ kann auch eine Fixierung der Lage der Längsseiten 3, 4 und der Querseiten 5, 6 über eine Fixierung der Schwenkgelenke 7 vorgesehen sein. Der Container 1 besitzt an seinen Ecken genormte Iso-Ecken 13, die zum Anbau von weiteren Teilen und/oder zum Befestigen mehrerer Container 1 aneinander und/oder zum Befestigen eines Containers beispielsweise auf einem LKW dienen können.

Wie Fig. 1 zeigt, besitzt der Containerboden 2 zwei Aufnahmen 14, die zum Eingriff der Gabel eines Gabelstaplers dienen. Dadurch kann der Container 1 einfach mittels eines Gabelstaplers transportiert werden. Wie Fig. 2 auch zeigt, besitzt der Containerboden 2 im Ausführungsbeispiel zwei Montageöffnungen 18, die zur Aufnahme von Hubvorrichtungen dienen, die im Folgenden noch näher beschrieben werden. Der Roboterarm 15 besitzt einen Ständer 20, der fest am Containerboden 2 fixiert ist. Im Ausführungsbeispiel ist der Roboterarm 15 außermittig an dem Containerboden 2 fixiert. Der Roboterarm 15 kann dadurch in eine Position gebracht werden, in der der Roboterarm 15 vollständig im Containerinnenraum 12 (Fig. 1) angeordnet ist.

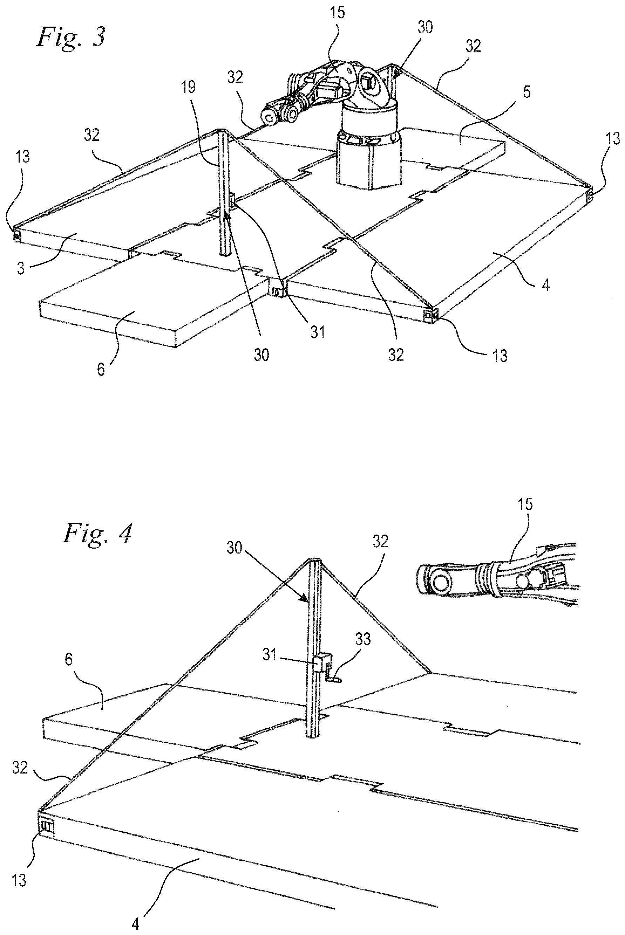

Zur Verstellung der Längsseiten 3, 4 und der Querseiten 5, 6 zwischen der nach oben geschwenkten Stellung 27 und der nach außen geschwenkten Stellung 28 sind in Fig. 3 gezeigte Hubvorrichtungen 30 vorgesehen. Im Ausführungsbeispiel sind zwei Hubvorrichtungen 30 jeweils benachbart zu den Querseiten 5 und 6 an der Bodenplatte 2 angeordnet. Jede Hubvorrichtung 30 besitzt einen Pfosten 19, wie auch Fig. 4 zeigt. Die Pfosten 19 sind in den Montageöffnungen 18 (Fig. 2) montiert. Am Pfosten 19 ist eine Seilwinde 31 festgelegt, die im Ausführungsbeispiel über eine Kurbel 33 von Hand zu betätigen ist. Anstatt oder zusätzlich zur Kurbel 33 kann auch ein Elektromotor zum Antrieb der Seilwinde 31 vorgesehen sein. Auf der Seilwinde 31 sind zwei Seile 32 aufgewickelt, die jeweils mit einer der Längsseiten 3, 4 verbunden sind. Im Ausführungsbeispiel sind die Seile 32 einer Hubvorrichtung 30 zu den gegenüberliegenden oberen Ecken von gegenüberliegenden Längsseiten 3, 4 geführt. Durch Aufwickeln oder Abwickeln der Seile 32 von der Seilwinde 31 können die Längsseiten 3, 4 zwischen der nach außen geschwenkten Stellung 28 und der nach oben geschwenkten Stellung 27 verstellt werden.

Auch andere Gestaltungen der Hubvorrichtungen 30 können vorteilhaft sein. Auch eine andere Anzahl und Anordnung von Hubvorrichtungen 30 kann vorteilhaft sein.

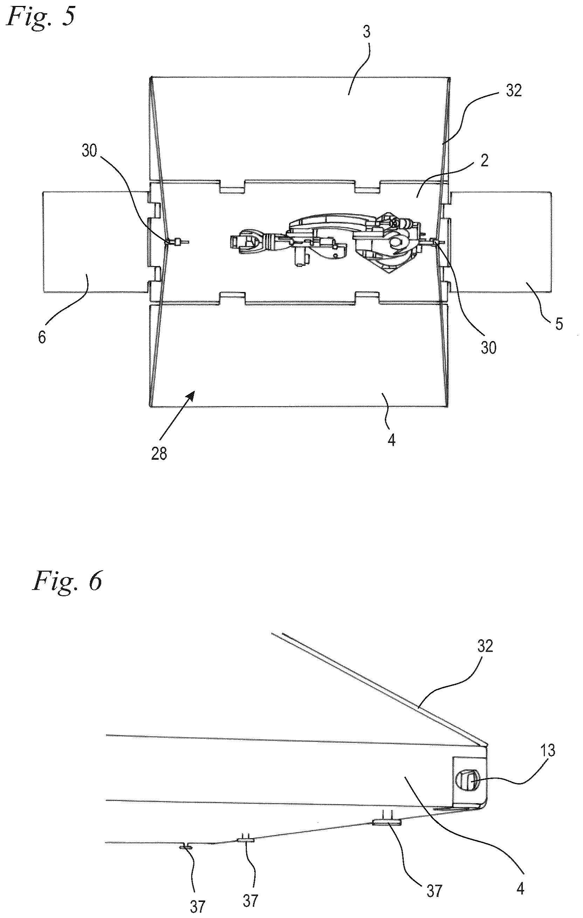

In Fig. 5 ist die Anordnung der Hubvorrichtungen 30 auf dem Containerboden 2 und die außermittige Anordnung des Ständers 20 auf dem Containerboden 2 gezeigt.

In der nach außen geschwenkten Stellung 28 stützen sich die Längsseiten 3, 4 und die Querseiten 5, 6 vorteilhaft am Boden ab. Hierzu sind im Ausführungsbeispiel Stellfüße 37 vorgesehen, die in Fig. 6 schematisch dargestellt sind. Die Stellfüße 37 sind an der Seite der Längsseiten 3, 4 und Querseiten 5, 6 vorgesehen, die in der nach außen geschwenkten Stellung 28 dem Boden zugewandt angeordnet sind. Die Stellfüße 37 können lösbar an den Längsseiten 3, 4 und den Querseiten 5, 6 angeordnet sein. Alternativ ist auch eine Abstützung über die Iso-Ecken 13 möglich. Die Stellfüße 37 sind vorteilhaft in ihrer Höhe justierbar, so dass ein sicherer Stand der Roboterstandplattform 16 auch auf unebenem Boden gewährleistet werden kann.

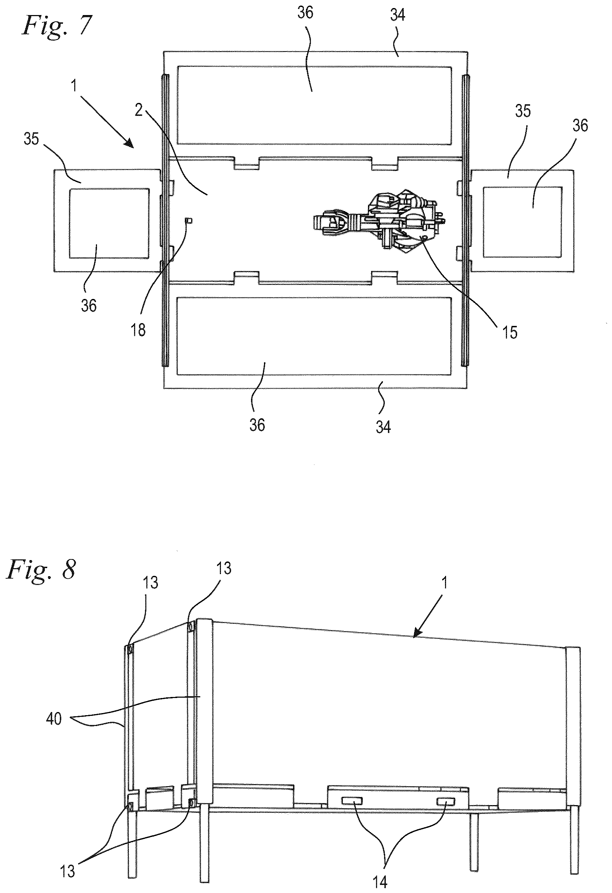

Die Längsseiten 3, 4 und die Querseiten 5, 6 können vollständig aus festem Material wie beispielweise Blech gebildet sein. Alternativ kann auch vorgesehen sein, dass die Längsseiten 3, 4 und die Querseiten 5, 6 jeweils durch Rahmen 34 und 35 gebildet sind, wie dies in Fig. 7 schematisch dargestellt ist. Die Rahmen sind vorteilhaft rechteckig. Vorteilhaft stützen sich die Längsseiten 3, 4 und die Querseiten 5, 6 in der nach außen geschwenkten Stellung 27 (Fig. 2) über die Rahmen 34 und 35 gegenüber dem Boden ab. Die Stellfüße 37 (Fig. 6) sind bevorzugt an den äußeren, in der nach oben geschwenkten Stellung 27 oben angeordneten Holmen der Rahmen 34 und 35 angeordnet. Die Rahmen 34 und 35 sind in der nach oben geschwenkten Stellung 27 (Fig. 1) vorteilhaft mit Plane bespannt. Auch das Dach des Containers 1 ist vorteilhaft mit Plane bespannt.

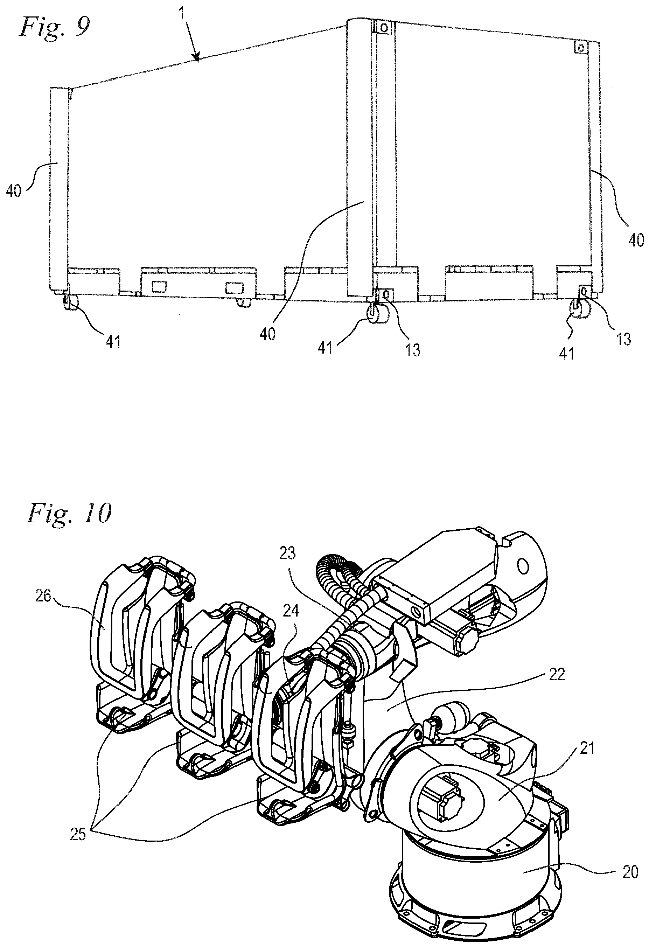

Wie Fig. 8 zeigt, können an den Iso-Ecken 13 beliebige Anbauten fixiert werden. Im Ausführungsbeispiel nach Fig. 13 sind an den Iso-Ecken 13 jeweils Hubvorrichtungen 40 vorgesehen, mit denen der Container beispielsweise zum Abladen von einem LKW aufgeständert werden kann. Wie Fig. 9 zeigt, können an den Iso-Ecken 13 auch Rollen 41 fixiert werden. Die Rollen 41 dienen vorteilhaft dazu, den Container 1 mittels eines Gabelstaplers zu bewegen.

Der Roboterarm 15 ist vorteilhaft als Fahrgeschäft ausgebildet. Dies ist in Fig. 10 gezeigt. Der Roboterarm 15 ist vorteilhaft ein Sechsachsroboter mit einem Ständer 20, an dem ein Karussell 21 drehbar gelagert ist. Am Karussell 21 ist eine Schwinge 22 schwenkbar gelagert, an der wiederum ein Arm 23 schwenkbar gelagert ist. Der Arm 23 besitzt einen Handabschnitt 24, der vorteilhaft drei Schwenkachsen besitzt. Am Handabschnitt 24 sind ein oder mehrere Sitze 25 fixiert. Die Sitze 25 besitzen Sicherheitsbügel 26, mit denen ein Fahrgast sicher im Sitz 25 gehalten ist. Derartige Roboterarme 15, die als Fahrgeschäft dienen, führen im Betrieb sehr schnelle Bewegungen aus. Gleichzeitig sind die am Handabschnitt 24 eingeleiteten Kräfte aufgrund des Gewichts der in den Sitzen 25 sitzenden Personen sehr groß. Zur Aufnahme dieser Kräfte ist der Containerboden 2 vorteilhaft verstärkt ausgebildet. Auch die Längsseiten 3, 4, insbesondere die die Längsseiten 3, 4 bildenden Rahmen 34, können entsprechend stabil ausgebildet sein, um die im Betrieb am Roboterarm 15 wirkenden Kräfte sicher über die Roboterstandform 16 aufzunehmen und in den Boden einzuleiten.

In vorteilhafter alternativer Gestaltung ist der Roboterarm 15 als Simulator, beispielsweise als Flugsimulator oder Fahrsimulator, ausgebildet. Anstatt der Sitze 25 ist bei der Ausbildung des Roboterarms 15 als Simulator vorteilhaft eine Gondel mit mindestens einem Sitz am Handabschnitt 24 gehalten. Die Gondel weist vorteilhaft Steuereinrichtungen zur Ansteuerung des Roboterarms 15 auf, über die ein Benutzer mit der Simulation interagieren kann. Vorteilhaft ist eine Anzeigeeinrichtung zur Anzeige einer Simulationsumgebung, beispielsweise ein Bildschirm oder eine Anzeigebrille, vorgesehen.

Der Container 1 kann auch für Roboterarme 15 für andere Anwendungen vorteilhaft sein.

## Patentansprüche

1. Container mit integrierter Roboterstandplattform, wobei der Container (1) einen Containerboden (2) aufweist, auf dem ein Roboterarm (15) fixiert ist, wobei der Container (1) zwei Längsseiten (3, 4) aufweist, wobei die Längsseiten (3, 4) zur Bildung der Roboterstandplattform (16) nach außen schwenkbar an dem Containerboden (2) gelagert sind.

2. Container nach Anspruch 1,
**dadurch gekennzeichnet, dass** der Container (1) Mittel zur Fixierung der Längsseiten (3, 4) an dem Containerboden (2) in der nach außen geschwenkten Stellung (28) aufweist.

3. Container nach Anspruch 1 oder 2,
**dadurch gekennzeichnet, dass** die Längsseiten (3, 4) in der nach außen geschwenkten Stellung (28) in einer Ebene mit dem Containerboden (2) liegen.

4. Container nach einem der Ansprüche 1 bis 3,
**dadurch gekennzeichnet, dass** der Container (1) mindestens eine Hubvorrichtung (30) zum Aufrichten und/oder Absenken der Längsseiten (3, 4) aufweist.

5. Container nach Anspruch 4,
**dadurch gekennzeichnet, dass** die Hubvorrichtung (30) mindestens eine Seilwinde (31) sowie mindestens ein an einer Längsseite (3, 4) befestigtes Seil (32) aufweist.

6. Container nach einem der Ansprüche 1 bis 5,
**dadurch gekennzeichnet, dass** der Container (1) Querseiten (5, 6) aufweist.

7. Container nach Anspruch 6,
**dadurch gekennzeichnet, dass** mindestens eine Querseite (5, 6) nach außen schwenkbar an dem Containerboden (2) gelagert ist.

8. Container nach einem der Ansprüche 1 bis 7,
**dadurch gekennzeichnet, dass** die Ecken des Containers (1) als Iso-Ecken (13) ausgebildet sind.

9. Container nach einem der Ansprüche 1 bis 8,
**dadurch gekennzeichnet, dass** der Containerboden (2) Aufnahmen (14) für die Gabel eines Gabelstaplers aufweist.

10. Container nach einem der Ansprüche 1 bis 9,
**dadurch gekennzeichnet, dass** mindestens eine Längsseite (3, 4) und/oder mindestens eine Querseite (5, 6) als mit einer Plane (36) abdeckbarer Rahmen (34, 35) ausgebildet ist.

11. Container nach einem der Ansprüche 1 bis 10,
**dadurch gekennzeichnet, dass** mindestens eine Längsseite (3, 4) und/oder mindestens eine Querseite (5, 6) als feste Wand ausgebildet ist.

12. Container nach einem der Ansprüche 1 bis 11,
**dadurch gekennzeichnet, dass** der Containerboden (2) zur Abfangung der Betriebslasten des Roboterarms (15) verstärkt ausgebildet ist.

13. Container nach einem der Ansprüche 1 bis 12,
**dadurch gekennzeichnet, dass** der Roboterarm (15) zum Betrieb als Fahrgeschäft vorgesehen ist und dass der Containerboden (2) zur Abfangung der beim Betrieb des Roboterarms (15) als Fahrgeschäft auftretenden Betriebslasten ausgelegt ist.
